# EUROPEAN PATENT SPECIFICATION

(11) **EP 2 679 931 B1**
(45) Date of publication and mention of the grant of the patent: **17.03.2021**
(21) Application number: 13169539.7
(22) Date of filing: 28.05.2013
(51) Int. Cl.: F25B 13/00, F25B 49/02, F25B 43/00, F25B 45/00, F25B 47/00

(54) **Air conditioner**
Klimaanlage
Climatiseur

(30) Priority: 28.06.2012 JP 2012145150
(43) Date of publication of application: 01.01.2014
(73) Proprietor: MITSUBISHI HEAVY INDUSTRIES THERMAL SYSTEMS, LTD., Tokyo 108-8215 (JP)
(72) Inventor: Murakami, Kenichi, Tokyo, 108-8215 (JP)
(74) Representative: Cabinet Beau de Loménie

(56) References cited:
- EP-A1- 1 022 524
- EP-A1- 1 662 214
- EP-A2- 1 054 221
- JP-A- 2004 293 883

## Description

### Technical Field

The present invention relates to an air conditioner which can be installed by using existing connection pipes upon replacing an existing air conditioner with a new air conditioner.

### Background Art

When an installed air conditioner is replaced with a new air conditioner, a method may be employed in which the air conditioner is replaced by directly using existing connection pipes, that is, a gas refrigerant pipe and a liquid refrigerant pipe both of which connect an outdoor unit and an indoor unit, installed within a building by connecting a new outdoor unit and a new indoor unit to the pipes. However, there is a possibility that contaminated matters such as dust and oil adhere to or remain on the existing connection pipes. Accordingly, in the case of using the existing connection pipes, it is necessary to clean the connection pipes to remove contaminated matters therefrom before using the existing connection pipes.

In general, as a method for cleaning the connection pipes, a method is used in which a refrigerant is circulated to wash out contaminated matters by the refrigerant. However, if the existing air conditioner is inoperable, it is difficult for the existing air conditioner to perform pipe cleaning. Accordingly, it is necessary to provide the newly-installed air conditioner with a pipe cleaning function. PTL 1 discloses a technique in which a collecting apparatus that collects contaminated matters such as oil is connected to a suction pipe of a compressor; an air conditioner is allowed to perform a cooling operation after the connection of the pipe; and an aperture of an expansion valve is set to be larger than an aperture for a normal cooling operation, thereby allowing a refrigerant to circulate in a damp state (air-liquid two-phase flow) to perform pipe cleaning in a so-called liquid flowing back operation. Another pipe cleaning technique is disclosed in patent document EP 1662214 A1.

### Citation ListPatent Literature

{PTL 1}
Japanese Unexamined Patent Application, Publication No. 2004-333121

### Summary of Invention

### Technical Problem

However, in the technique in which the refrigerant in the damp state is caused to flow to thereby clean the connection pipes by a so-called liquid flowing back operation, the detergency for oil and the like adhering to the inner surface of the pipes cannot be sufficiently secured, so that the cleaning operation time tends to increase. Further, as the cleaning operation time increases, the total refrigerant liquid flowing back amount increases. Accordingly, it is necessary to take measures to protect the compressor. If the wetness of the refrigerant decreases, the detergency is further lowered, resulting in a problem of an increase in the cleaning operation time, for example.

The present invention has been made in view of the above-mentioned circumstances, and an object of the present invention is to provide an air conditioner which is installed by using existing connection pipes and in which a cleaning operation time for connection pipes can be reduced as much as possible.

### Solution to Problem

To solve the above-mentioned problem, there is provided an air conditioner as defined in the appended claims.

An air conditioner according to a first aspect and a second aspect of the present invention is defined in claims 1 and 4, respectively.

According to the present invention, the air conditioner which is installed by using the existing connection pipes includes the pipe cleaning control portion that cleans the existing connection pipes by allowing the aperture of the electronic expansion valve for cooling to be periodically opened and closed for a plurality of times between the aperture A during the superheat degree control and the aperture B in the fully-opened state or in the substantially fully-opened state, in the cooling cycle, to intermittently cause liquid flowing back during the pipe cleaning operation after connecting the outdoor unit and the indoor unit. Accordingly, the electronic expansion valve for cooling is allowed to periodically opened and closed for a plurality of times between the aperture A during the superheat degree control and the aperture B in the fully-opened state or in the substantially fully-opened state to cause intermittent liquid flowing back, which makes it possible to cause liquid flowing back of the refrigerant in a liquid richer state during each liquid flowing back operation of the plurality of liquid flowing back operations which are intermittently carried out, as compared with the case that the aperture of the electronic expansion valve for cooling is set to a constant aperture which is larger than the aperture during the superheat degree control and the liquid flowing back operation is continuously performed for a certain period of time. Therefore, the detergency and cleaning effect obtained during the cleaning of the existing connection pipes are enhanced, which leads to reduction in the pipe cleaning operation time. In other words, the liquid flowing back operation during pipe cleaning is carried out to wash out contaminated matters such as oil and chlorine adhering to the inner surface of the pipes. Even in the case of causing liquid flowing back of the same amount of refrigerant, higher detergency can be attained when contaminated matters are washed out by intermittently flowing the refrigerant in a liquid richer state, than when the liquid flowing back operation is carried out by continuously flowing the refrigerant with higher wetness for a certain period of time. This leads to reduction in the cleaning operation time.

According to an embodiment, in the air conditioner described above, when the electronic expansion valve for cooling is periodically opened and closed, a ratio between a time for setting the aperture A during the superheat degree control and a time for setting the aperture B in the fully opened state or in the substantially fully-opened state is approximately 2:1 to 4:1.

According to an embodiment, the ratio between the time for setting the aperture A during the superheat degree control and the time for setting the aperture B in the fully opened state or in the substantially fully-opened state is approximately 2:1 to 4:1. Accordingly, during the pipe cleaning operation, the time for setting the aperture B of the electronic expansion valve for cooling in the fully-opened state or in the substantially fully-opened state is set to approximately 1/2 to 1/4 of the time for setting the aperture A during the superheat degree control, and the time for the liquid flowing back operation is shortened. This makes it possible to suppress the total amount of the liquid flowing backed refrigerant and to cause liquid flowing back of the refrigerant in a liquid richer state during each liquid flowing back operation of the plurality of liquid flowing back operations carried out. This leads to an increase in the detergency of the existing connection pipes and reduction in the pipe cleaning operation time.

Furthermore, according to the present invention, in any one of the air conditioners described above, a contaminated matter collecting portion that collects contaminated matters remaining in the existing connection pipes is provided in a refrigerant circuit of the outdoor unit.

According to the present invention, the contaminated matter collecting portion that collects contaminated matters remaining in the existing connection pipes is provided in the refrigerant circuit of the outdoor unit. Accordingly, the contaminated matter collecting portion provided in the refrigerant circuit of the outdoor unit can collect contaminated matters which are collected in the circuit of the outdoor unit from the connection pipes by the liquid flowing back operation during the pipe cleaning operation, and can remove the contaminated matters from the refrigerant circuit. This prevents the contaminated matters remaining in the connection pipes from affecting the normal air-conditioning operation.

Furthermore, according to the air conditioner of the first aspect of the present invention, in the air conditioner described above, the contaminated matter collecting portion includes a bypass circuit including a dryer which is connected in parallel with an electronic expansion valve for heating provided in the refrigerant circuit of the outdoor unit and allows a refrigerant to circulate only during the pipe cleaning operation.

According to the first aspect of the present invention, the contaminated matter collecting portion includes the bypass circuit including the dryer which is connected in parallel with the electronic expansion valve for heating provided in the refrigerant circuit of the outdoor unit and allows the refrigerant to circulate only during the pipe cleaning operation. Accordingly, the electronic expansion valve for heating is brought into the fully-closed state during the pipe cleaning operation, and the refrigerant is caused to flow to the side of the bypass circuit in which the refrigerant can circulate only during the pipe cleaning operation, thereby making it possible to collect and remove the contaminated matters such as oil and chlorine collected from the existing connection pipes by the pipe cleaning operation, using an adsorption function of the dryer. Therefore, the bypass circuit exclusively used for collecting contaminated matters collected by the pipe cleaning operation facilitates the collection and removal of contaminated matters from the circuit in which the refrigerant circulates during a normal operation.

Furthermore, according to an embodiment; in the air conditioner described above, the bypass circuit is a circuit including a solenoid valve formed at an inlet side of the dryer, and a check valve formed at an outlet side.

According to an embodiment, the bypass circuit is a circuit including the solenoid valve formed at the inlet side of the dryer, and the check valve formed the outlet side. Accordingly, during the pipe cleaning operation, the solenoid valve is opened to thereby allow the refrigerant to circulate at the bypass circuit side, while after completing the pipe cleaning operation, the solenoid valve is closed to thereby prevent the refrigerant from circulating into the bypass circuit. Therefore, it is possible to form the permanently-installed bypass circuit which allows the refrigerant to circulate only during pipe cleaning using one solenoid valve and which serves to collect contaminated matters, thereby saving time and labor for attaching and detaching the contaminated matter collecting portion.

Furthermore, according to the air conditioner of the second aspect of the present invention, in the air conditioner described above, the contaminated matter collecting portion includes a detachable auxiliary accumulator which is provided at an outside of a gas-side operation valve within the refrigerant circuit of the outdoor unit, wherein the refrigerant is circulated in the auxiliary accumulator only during the pipe cleaning operation.

According to the second aspect of the present invention, the contaminated matter collecting portion includes the detachable auxiliary accumulator which is provided at the outside of the gas-side operation valve within the refrigerant circuit of the outdoor unit, and a refrigerant is circulated in the auxiliary accumulator only during the pipe cleaning operation. Accordingly, during the pipe cleaning operation, the refrigerant which is circulated and liquid flowing back through the gas refrigerant pipe of the connection pipes from the indoor unit side by an intermittent liquid flowing back operation is held by the auxiliary accumulator provided at the inlet portion of the outdoor unit, thereby making it possible to collect contaminated matters and hold the liquid refrigerant to be gradually returned to the compressor side. Therefore, it is possible to directly collect and remove the contaminated matters remaining in the existing connection pipes, and to improve the collection efficiency, prevent liquid flowing back of a large amount of refrigerant to the compressor, and protect the compressor. Moreover, the detachable auxiliary accumulator that secures a certain volume and has a volume commensurate with a plurality of intermittent liquid flowing back operations makes it possible to reliably protect the compressor.

### Advantageous Effects of Invention

According to the present invention, the electronic expansion valve for cooling is allowed to periodically opened and closed for a plurality of times between the aperture A during the superheat degree control and the aperture B in the fully-opened state or in the substantially fully-opened state to thereby cause intermittent liquid flowing back, which makes it possible to cause liquid flowing back of the refrigerant in a liquid richer state during each liquid flowing back operation of the plurality of liquid flowing back operations which are intermittently carried out, as compared with the case that the aperture of the electronic expansion valve for cooling is set to a constant aperture which is larger than the aperture during the superheat degree control and the liquid flowing back operation is continuously performed for a certain period of time. Therefore, the detergency and cleaning effect obtained during the cleaning of the existing connection pipes can be enhanced, and the pipe cleaning operation time can be reduced. In other words, the liquid flowing back operation during pipe cleaning is carried out to wash out contaminated matters such as oil and chlorine adhering to the inner surface of the pipes. Even in the case of causing liquid flowing back of the same amount of refrigerant, higher detergency can be attained when contaminated matters are washed out by intermittently flowing the refrigerant in a liquid richer state, than when the liquid flowing back operation is carried out by continuously flowing the refrigerant with higher wetness for a certain period of time. This leads to reduction in the cleaning operation time.

### Brief Description of Drawings

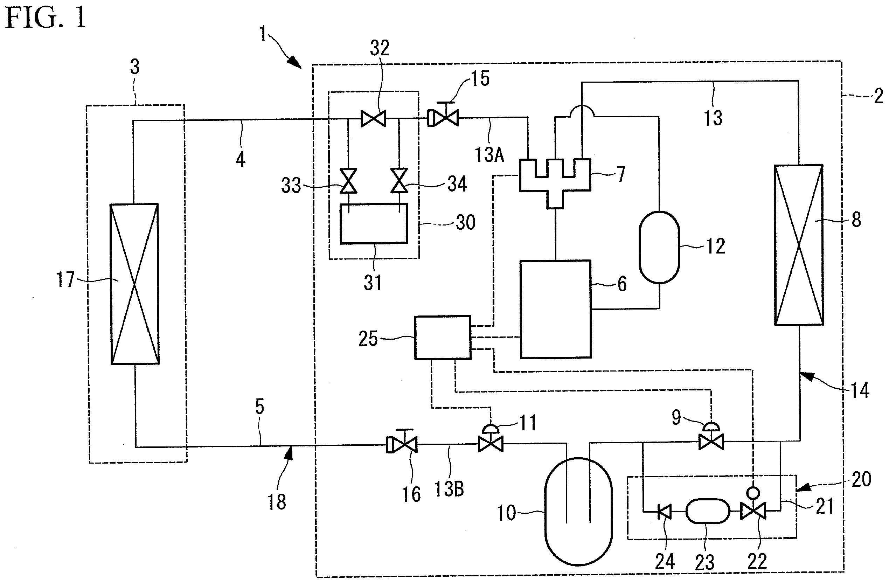

{Fig. 1}
   Fig. 1 is a schematic block diagram of an air conditioner according to first and second embodiments of the present invention.
{Fig. 2}
   Fig. 2 is an explanatory diagram illustrating an operation state of an electronic expansion valve for cooling during a pipe cleaning operation of the air conditioner illustrated in Fig. 1.
{Fig. 3}
   Fig. 3 is a schematic diagram illustrating a liquid flowing back state within a gas refrigerant pipe (connection pipes) during the pipe cleaning operation of the air conditioner illustrated in Fig. 1.

### Description of Embodiments

Embodiments of the present invention will be described below with reference to the drawings.

### {First Embodiment}

A first embodiment of the present invention will be described below with reference to Figs. 1 to 3.

Fig. 1 illustrates a schematic block diagram of an air conditioner according to the first embodiment of the present invention.

An air conditioner 1 has a configuration in which an outdoor unit 2 and at least one indoor unit 3 are connected through a gas refrigerant pipe 4 and a liquid refrigerant pipe 5 which are connection pipes.

On the side of the outdoor unit 2, there is a compressor 6 that compresses a low-pressure gas refrigerant; a four-way switching valve 7 for switching a circulation direction of a refrigerant; an outdoor heat exchanger 8 that exchanges heat between the refrigerant and the external air; an electronic expansion valve for heating (EEVH) 9 which has an aperture controlled during heating; a receiver 10 that accumulates the liquid refrigerant; an electronic expansion valve for cooling (EEVC) 11 which has an aperture controlled during cooling; and an accumulator 12 that separates a liquid from the refrigerant sucked to the compressor 6, for example. These components are sequentially connected in a known manner through a refrigerant pipe 13, thereby constituting an outdoor-side refrigerant circuit 14.

Note that a gas pipe 13A, which is connected to the four-way switching valve 7 of the outdoor-side refrigerant circuit 14, and a liquid pipe 13B, which is connected to the electronic expansion valve for cooling (EEVC) 11, are provided with a gas-side operation valve 15 and a liquid-side operation valve 16, respectively. Assume that an outdoor blower (not illustrated) that allows the external air to blow to the outdoor heat exchanger 8 is provided on the side of the outdoor unit 2.

On the side of the indoor unit 3, an indoor heat exchanger 17 that exchanges heat between the refrigerant and the internal air is disposed, and the indoor heat exchanger 17 is connected to the outdoor unit 2 through the gas refrigerant pipe 4 and the liquid refrigerant pipe 5 which are connection pipes. In this manner, a close-cycle refrigerant circuit 18 is formed, and as publicly known, a cooling operation or a heating operation can be carried out by switching a cooling cycle or a heating cycle through the four-way switching valve 7. An indoor blower (not illustrated) is provided on the side of the indoor unit 3. The heat of the internal air circulated through the indoor blower is exchanged with the heat of the refrigerant by the indoor heat exchanger 17 to thereby perform cooling or heating, and the cooled air or heated air is blown into a room, which contributes to cooling or heating of the room.

In the air conditioner 1 as described above, in the case of replacing an existing old air conditioner with the new air conditioner 1, the gas refrigerant pipe 4 and the liquid refrigerant pipe 5, which are already installed in a building, are directly used as connection pipes and the outdoor unit 2 and the indoor unit 3 are connected to the pipes to install the new air conditioner 1 in some cases. In this case, the old refrigerant remaining in the refrigerant circuit 18 can be removed by vacuuming. However, contaminated matters such as oil and chlorine adhering to the inner surface of each of the gas refrigerant pipe 4 and the liquid refrigerant pipe 5, which are connection pipes, cannot be removed by vacuuming.

In view of this, a contaminated matter collecting portion 20 and a pipe cleaning control portion 25 are provided to the newly-installed air conditioner 1. The contaminated matter collecting portion 20 and the pipe cleaning control portion 25 are used to clean the existing connection pipes, which are used as the gas refrigerant pipe 4 and the liquid refrigerant pipe 5, by the refrigerant to collect and remove contaminated matters such as oil and chlorine remaining on the inner surface.

The contaminated matter collecting portion 20 includes a bypass circuit 21 which is connected in parallel with the electronic expansion valve for heating (EEVH) 9 provided in the outdoor-side refrigerant circuit 14. In the bypass circuit 21, a solenoid valve 22, a dryer 23, and a check valve 24, which are opened only during the pipe cleaning operation, are sequentially provided in series, and the refrigerant is circulated only during the pipe cleaning operation which is carried out in a cooling cycle. As the dryer 23, a known dryer which is generally interposed in the refrigerant circuit 18 and is filled with adsorbent/desiccant, such as activated carbon, activated alumina, or molecular sheave, through a strainer in a container can be used.

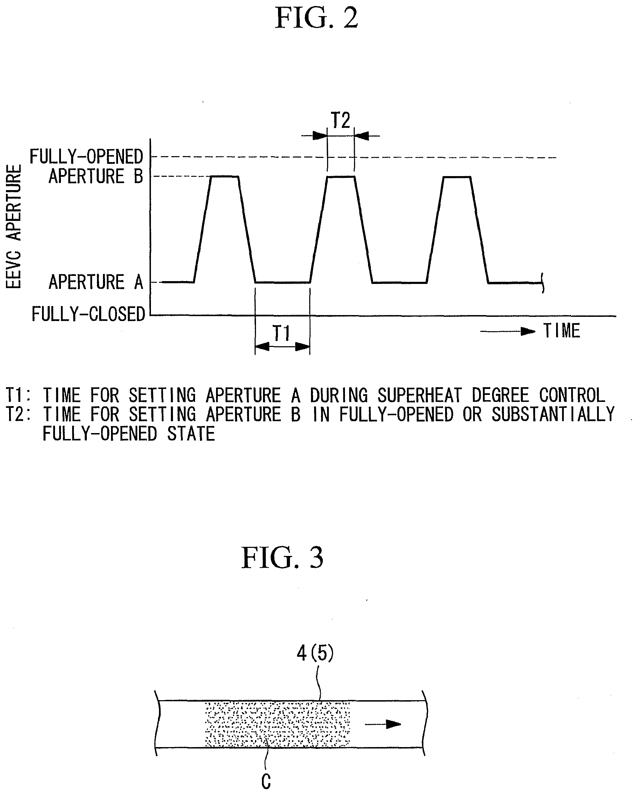

During the pipe cleaning operation upon installation of the air conditioner 1, the pipe cleaning control portion 25 switches the four-way switching valve 7 to the cooling cycle to operate the compressor 6. Further, the pipe cleaning control portion 25 controls the electronic expansion valve for heating (EEVH) 9 to be fully opened, controls the solenoid valve 22 to be opened, and controls the electronic expansion valve for cooling (EEVC) 11 to be periodically opened and closed for a plurality of times between an aperture A during a normal superheat degree control and an aperture B in a fully-opened state or in a substantially fully-opened state. As illustrated in Fig. 2, when the electronic expansion valve for cooling (EEVC) 11 is controlled to be periodically opened and closed, a ratio of a time T1 for setting the aperture A during the superheat degree control and a time T2 for setting the aperture B in the fully-opened state or in the substantially fully-opened state is set to approximately 1:2 to 1:4. For example, assuming that the time T2 in the fully opened state is one minute, the time T1 during the superheat degree control is two to four minutes. This is periodically repeated about 20 times, for example.

As a result, the refrigerant is circulated intermittently a plurality of times in a liquid-rich state C as illustrated in Fig. 3 in the gas refrigerant pipe 4 and the liquid refrigerant pipe 5, which are the existing connection pipes, during the pipe cleaning operation. This liquid flowing back operation allows contaminated matters such as oil and chlorine remaining particularly in the gas refrigerant pipe 4 to be washed out and guided to the refrigerant circuit 14 on the side of the outdoor unit 2. Then, the contaminated matters are allowed to circulate into the bypass circuit 21 serving as the contaminated matter collecting portion 20, and are adsorbed to the dryer 23, thereby making it possible to remove the contaminated matters from the refrigerant circuit 18 and trap the contaminated matters into the bypass circuit 21.

In the structure described above, the following operation and effect can be obtained according to this embodiment.

When the air conditioner 1 is installed using the gas refrigerant pipe 4 and the liquid refrigerant pipe 5 which are the existing connection pipes, it is necessary to wash out, collect, and remove contaminated matters such as oil and chlorine remaining in the gas refrigerant pipe 4 and the liquid refrigerant pipe 5 by the pipe cleaning operation after connection of the pipes. In this embodiment, during the pipe cleaning operation, the four-way switching valve 7 is switched to the cooling cycle side to operate the compressor 6; the electronic expansion valve for heating (EEVH) 9 is controlled to be fully closed; the solenoid valve 22 is controlled to be opened; and the electronic expansion valve for cooling (EEVC) 11 is controlled to be periodically opened and closed for a plurality of times between the aperture A during the normal superheat degree control and the aperture B in the fully-opened state or in the substantially fully-opened state.

As a result, as illustrated in Fig. 2, the electronic expansion valve for cooling (EEVC) 11 is periodically opened and closed between the aperture A during the superheat degree control and the aperture B in the fully-opened state or in the substantially fully-opened state, and when the aperture B in the fully-opened state or in the substantially fully-opened state is set, a liquid-rich refrigerant C is caused to flow to the side of the outdoor unit 2 through the liquid refrigerant pipe 5, the indoor unit 3, and the gas refrigerant pipe 4 as illustrated in Fig. 3, thereby enabling so-called liquid flowing back operation. This liquid-rich refrigerant C allows contaminated matters such as oil and chlorine remaining in the gas refrigerant pipe 4 and the liquid refrigerant pipe 5 to be washed out.

The contaminated matters such as oil and chlorine are gradually moved within the refrigerant circuit 14 on the side of the outdoor unit 2, and are circulated into the bypass circuit 21 in which the solenoid valve 22 is opened. The bypass circuit 21 is provided with the dryer 23. The above-mentioned contaminated matters are adsorbed to the dryer 23 to thereby make it possible to collect and remove the contaminated matters from the refrigerant circuit 18. At the time when the pipe cleaning operation is completed, the solenoid valve 22 is closed. Accordingly, the contaminated matters adsorbed to the dryer 23 can be trapped in the bypass circuit 21, which includes the dryer 23, by the check valve 24 and the closed solenoid valve 22.

Thus, in this embodiment, the electronic expansion valve for cooling (EEVC) 11 is periodically opened and closed for a plurality of times between the aperture A during the superheat degree control and the aperture B in the fully-opened state or in the substantially fully-opened state, to thereby cause intermittent liquid flowing back. This makes it possible to cause liquid flowing back of the more liquid-rich refrigerant C during each liquid flowing back operation of the plurality of liquid flowing back operations which are intermittently carried out, as compared with the case that the aperture of the electronic expansion valve for cooling 11 is set to a constant aperture which is larger than the aperture during the superheat degree control and the liquid flowing back operation is continuously performed for a certain period of time.

For this reason, the detergency and cleaning effect obtained during the cleaning of the gas refrigerant pipe 4 and the liquid refrigerant pipe 5, which are the existing connection pipes, can be enhanced, and the pipe cleaning operation time can be reduced. In other words, the liquid flowing back operation during pipe cleaning is carried out to wash out contaminated matters such as oil and chlorine adhering to the inner surfaces of the gas refrigerant pipe 4 and the liquid refrigerant pipe 5. Even in the case of causing liquid flowing back of the same amount of refrigerant, higher detergency can be attained when contaminated matters are washed out by intermittently flowing the refrigerant C in a liquid richer state, than when the liquid flowing back operation is carried out by continuously flowing the refrigerant with higher wetness for a certain period of time. This leads to reduction in the cleaning operation time.

Further, when the electronic expansion valve for cooling (EEVC) 11 is periodically opened and closed as described above, the ratio between the time T1 for setting the aperture A during the superheat degree control and the time T2 for setting the aperture B in the fully opened state or in the substantially fully-opened state is approximately 2:1 to 4:1. Accordingly, during the pipe cleaning operation, the time T2 for setting the aperture B of the electronic expansion valve for cooling 11 in the fully-opened state or in the substantially fully-opened state is set to approximately 1/2 to 1/4 of the time T1 for setting the aperture A during the superheat degree control, and the time for the liquid flowing back operation is shortened. This makes it possible to suppress the total amount of the liquid flowing backed refrigerant and to cause liquid flowing back of the refrigerant C in a liquid richer state during each liquid flowing back operation of the plurality of liquid flowing back operations carried out. This leads to an increase in the detergency and cleaning effect of the gas refrigerant pipe 4 and the liquid refrigerant pipe 5, which are the existing connection pipes, and reduction in the pipe cleaning operation time.

Furthermore, in this embodiment, the contaminated matter collecting portion 20 that collects contaminated matters remaining in the existing connection pipes is provided in the outdoor-side refrigerant circuit 14. Accordingly, the contaminated matter collecting portion 20 can collect the contaminated matters which are collected to the side of the outdoor unit 2 from the gas refrigerant pipe 4 and the liquid refrigerant pipe 5, which are the connection pipes, by the liquid flowing back operation during the pipe cleaning operation, and can remove the contaminated matters from the refrigerant circuit 18. This prevents the contaminated matters remaining in the gas refrigerant pipe 4 and the liquid refrigerant pipe 5, which are the connection pipes, from affecting the normal air-conditioning operation.

The above-mentioned contaminated matter collecting portion 20 includes the bypass circuit 21 including the dryer 23 which is connected in parallel with the electronic expansion valve for heating (EEVH) 9 provided in the outdoor-side refrigerant circuit 14, and which allows the refrigerant to circulate only during the pipe cleaning operation. Accordingly, the electronic expansion valve for heating 9 is brought into the fully-closed state during the pipe cleaning operation, and the refrigerant is caused to flow to the side of the bypass circuit 21 in which the refrigerant can circulate only during the pipe cleaning operation, thereby making it possible to collect and remove the contaminated matters such as oil and chlorine collected from the gas refrigerant pipe 4 and the liquid refrigerant pipe 5, which are the existing connection pipes, by the pipe cleaning operation, by using the adsorption function of the dryer 23. Therefore, the bypass circuit 21 exclusively used for collecting contaminated matters collected by the pipe cleaning operation facilitates the collection and removal of contaminated matters from the refrigerant circuit 18.

Moreover, the above-mentioned bypass circuit 21 is a circuit in which the solenoid valve 22 is provided at the inlet side of the dryer 23 and the check valve 24 is provided at the outlet side. Accordingly, the solenoid valve 22 is opened during the pipe cleaning operation, thereby allowing the refrigerant to circulate at the bypass circuit 21 side, while the solenoid valve 22 is closed after completion of the pipe cleaning operation, thereby preventing the refrigerant from circulating into the bypass circuit 21. Therefore, it is possible to form the permanently-installed bypass circuit 21 which allows the refrigerant to circulate only during pipe cleaning using one solenoid valve and which serves to collect contaminated matters, thereby saving time and labor for attaching and detaching the contaminated matter collecting portion 20.

### Second Embodiment

Next, a second embodiment of the present invention will be described with reference to Fig. 1.

This embodiment differs from the above-described first embodiment in that the contaminated matter collecting portion 20 is replaced by a contaminated matter collecting portion 30. The other components are similar to those of the first embodiment, so the description thereof is omitted.

In this embodiment, as illustrated in Fig. 1, in the outdoor-side refrigerant circuit 14, an auxiliary accumulator 31 having a desired volume is detachably connected to the outside of the gas-side operation valve 15, thereby constituting the contaminated matter collecting portion 30.

The auxiliary accumulator 31 can switch circulation and non-circulation of the refrigerant flowing through the outdoor-side refrigerant circuit 14, by opening and closing three on-off valves 32, 33, and 34. Specifically, the auxiliary accumulator 31 has a structure in which the refrigerant can be prevented from circulating by opening the on-off valve 32 and closing the on-off valves 33 and 34 and the refrigerant can be circulated by closing the on-off valve 32 and opening the on-off valves 33 and 34. The auxiliary accumulator 31 is detachably mounted to the outdoor-side refrigerant circuit 14 through a flare groove joint or the like.

Thus, the contaminated matter collecting portion 30 of this embodiment is provided on the outside of the gas-side operation valve 15 in the outdoor-side refrigerant circuit 14, and includes the detachable auxiliary accumulator 31 in which the refrigerant is circulated only during the pipe cleaning operation. Accordingly, during the pipe cleaning operation, the refrigerant which is circulated through the gas refrigerant pipe 4, which is the connection pipe, from the side of the indoor unit 3 by an intermittent liquid flowing back operation and is liquid flowing backed to the side of the outdoor unit 2 is held by the auxiliary accumulator 31 provided at the inlet portion of the outdoor unit 2, thereby making it possible to collect contaminated matters and temporarily hold the liquid refrigerant to be gradually returned to the compressor 6 side.

Thus, according to this embodiment, the contaminated matters remaining in the gas refrigerant pipe 4 and the liquid refrigerant pipe 5, which are the connection pipes, can be directly collected and removed, and the collection efficiency can be enhanced, thereby making it possible to prevent liquid flowing back of a large amount of refrigerant to the compressor 6 and to protect the compressor 6. Moreover, the detachable auxiliary accumulator 31 that secures a certain volume and is commensurate with a plurality of intermittent liquid flowing back operations makes it possible to reliably protect the compressor 6. Note that this embodiment is effective for the air conditioner 1 in which the length of each connection pipe is long.

The above-described embodiments illustrate an example in which the present invention is applied to the single-type air conditioner 1 which is connected to one indoor unit 3. As a matter of course, the present invention can also be applied to a multi-type air conditioner to which a plurality of indoor units 3 is connected in the same manner.

### Reference Signs List

1 AIR CONDITIONER
2 OUTDOOR UNIT
3 INDOOR UNIT
4 GAS REFRIGERANT PIPE (CONNECTION PIPE)
5 LIQUID REFRIGERANT PIPE (CONNECTION PIPE)
9 ELECTRONIC EXPANSION VALVE FOR HEATING (EEVH)
11 ELECTRONIC EXPANSION VALVE FOR COOLING (EEVC)
14 OUTDOOR-SIDE REFRIGERANT CIRCUIT
15 GAS-SIDE OPERATION VALVE
20 CONTAMINATED MATTER COLLECTING PORTION
21 BYPASS CIRCUIT
22 SOLENOID VALVE
23 DRYER
24 CHECK VALVE
25 PIPE CLEANING CONTROL PORTION
30 CONTAMINATED MATTER COLLECTING PORTION
31 AUXILIARY ACCUMULATOR
32, 33, 34 ON-OFF VALVE
T1 TIME FOR SETTING APERTURE A DURING SUPERHEAT DEGREE CONTROL
T2 TIME FOR SETTING APERTURE B IN FULLY-OPENED OR SUBSTANTIALLY FULLY-OPENED STATE

## Claims

1. An air conditioner including an outdoor unit (2), at least one indoor unit (3) connected to the outdoor unit (2) through a liquid refrigerant pipe (5) and a gas refrigerant pipe (4), and existing connection pipes available for the liquid refrigerant pipe and the gas refrigerant pipe, wherein a contaminated matter collecting portion (20) that collects contaminated matters remaining in the existing connection pipes is provided in a refrigerant circuit of the outdoor unit (2), the air conditioner further comprising:
a pipe cleaning control portion (25) that cleans the existing connection pipes by allowing an aperture of an electronic expansion valve for cooling (11) provided in the refrigerant circuit of the outdoor unit (2) to be periodically opened and closed for a plurality of times between an aperture A during a superheat degree control and an aperture B in a fully-opened state or in a substantially fully-opened state, in a cooling cycle, to thereby intermittently cause liquid flowing back, during a pipe cleaning operation after connection of the outdoor unit (2) and the indoor unit (3),
wherein the contaminated matter collecting portion (20) comprises a bypass circuit (21) including a dryer (23) which is connected in parallel with an electronic expansion valve for heating (9) provided in the refrigerant circuit of the outdoor unit and allows a refrigerant to circulate only during the pipe cleaning operation.

2. The air conditioner according to claim 1, wherein when the electronic expansion valve for cooling (11) is periodically opened and closed, a ratio between a time for setting the aperture A during the superheat degree control and a time for setting the aperture B in the fully opened state or in the substantially fully-opened state is approximately 2:1 to 4:1.

3. The air conditioner according to claim 1, wherein the bypass circuit (21) is a circuit including a solenoid valve (22) formed at an inlet side of the dryer, and a check valve (24) formed at an outlet side.

4. An air conditioner including an outdoor unit (2), at least one indoor unit (3) connected to the outdoor unit (2) through a liquid refrigerant pipe (5) and a gas refrigerant pipe (4), and existing connection pipes available for the liquid refrigerant pipe and the gas refrigerant pipe, wherein a contaminated matter collecting portion (30) that collects contaminated matters remaining in the existing connection pipes is provided in a refrigerant circuit of the outdoor unit (2), the air conditioner further comprising:
a pipe cleaning control portion (25) that cleans the existing connection pipes by allowing an aperture of an electronic expansion valve for cooling (11) provided in the refrigerant circuit of the outdoor unit (2) to be periodically opened and closed for a plurality of times between an aperture A during a superheat degree control and an aperture B in a fully-opened state or in a substantially fully-opened state, in a cooling cycle, to thereby intermittently cause liquid flowing back, during a pipe cleaning operation after connection of the outdoor unit (2) and the indoor unit (3),
wherein the contaminated matter collecting portion (30) comprises a detachable auxiliary accumulator (31) which is provided at an outside of a gas-side operation valve (15) provided within the refrigerant circuit of the outdoor unit, in which a refrigerant is circulated in the auxiliary accumulator only during the pipe cleaning operation.

## Patentansprüche

1. Klimaanlage mit einem Außengerät (2), mindestens einem Innengerät (3), das durch ein Rohr für flüssiges Kältemittel (5) und ein Rohr für gasförmiges Kältemittel (4) mit dem Außengerät (2) verbunden ist, und bestehenden Verbindungsrohren, die für das Rohr für flüssiges Kältemittel und das Rohr für gasförmiges Kältemittel zur Verfügung stehen, wobei ein Sammelabschnitt für Verunreinigungen (20), der Verunreinigungen sammelt, die in den bestehenden Verbindungsrohren verbleiben, in einem Kältemittelkreislauf des Außengerätes (2) bereitgestellt wird, wobei die Klimaanlage ferner umfasst:
einen Rohrreinigungs-Steuerungsabschnitt (25), der die bestehenden Verbindungsrohre reinigt, indem er es einem Durchlass eines elektronischen Expansionsventils für die Kühlung (11), das in dem Kältemittelkreislauf des Außengerätes (2) vorgesehen ist, erlaubt, eine Vielzahl von Malen zwischen einer Öffnung A während einer Überhitzungsgradsteuerung und einer Öffnung B in einem vollständig geöffneten Zustand oder in einem im Wesentlichen vollständig geöffneten Zustand in einem Kühlzyklus periodisch geöffnet und geschlossen zu werden, um dadurch während eines Rohrreinigungsvorgangs nach dem Anschluss des Außengerätes (2) und des Innengerätes (3) in Intervallen Flüssigkeit zu veranlassen, zurückzufließen,
wobei der Sammelabschnitt (20) für Verunreinigungen eine Bypass-Schaltung (21) mit einem Trockner (23) umfasst, der zu einem elektronischen Expansionsventil für die Erwärmung (9) parallelgeschaltet ist, das in dem Kältemittelkreislauf des Außengerätes vorgesehen ist und es einem Kältemittel nur während des Rohrreinigungsvorgangs erlaubt zu zirkulieren.

2. Klimaanlage nach Anspruch 1, wobei, wenn das elektronische Expansionsventil für die Kühlung (11) periodisch geöffnet und geschlossen wird, ein Verhältnis zwischen einer Zeit für die Einstellung der Öffnung A während der Überhitzungsgradsteuerung und einer Zeit für die Einstellung der Öffnung B in den vollständig geöffneten Zustand oder in den im Wesentlichen vollständig geöffneten Zustand etwa 2:1 bis 4:1 beträgt.

3. Klimaanlage nach Anspruch 1, wobei die Bypass-Schaltung (21) eine Schaltung mit einem Magnetventil (22), das auf einer Einlassseite des Trockners ausgebildet ist, und einem Rückschlagventil (24) ist, das auf einer Auslassseite ausgebildet ist.

4. Klimaanlage mit einem Außengerät (2), mindestens einem Innengerät (3), das durch ein Rohr für flüssiges Kältemittel (5) und ein Rohr für gasförmiges Kältemittel (4) mit dem Außengerät (2) verbunden ist, und bestehenden Verbindungsrohren, die für das Rohr für flüssiges Kältemittel und das Rohr für gasförmiges Kältemittel zur Verfügung stehen, wobei ein Sammelabschnitt für Verunreinigungen (30), der Verunreinigungen sammelt, die in den bestehenden Verbindungsrohren verbleiben, in einem Kältemittelkreislauf des Außengerätes (2) bereitgestellt wird, wobei die Klimaanlage weiter umfasst:
einen Rohrreinigungs-Steuerungsabschnitt (25), der die bestehenden Verbindungsrohre reinigt, indem er es einem Durchlass eines elektronischen Expansionsventils für die Kühlung (11), das in dem Kältemittelkreislauf des Außengerätes (2) vorgesehen ist, erlaubt, eine Vielzahl von Malen zwischen einer Öffnung A während einer Überhitzungsgradsteuerung und einer Öffnung B in einem vollständig geöffneten Zustand oder in einem im Wesentlichen vollständig geöffneten Zustand in einem Kühlzyklus periodisch geöffnet und geschlossen zu werden, um dadurch während eines Rohrreinigungsvorgangs nach dem Anschluss des Außengerätes (2) und des Innengerätes (3) in Intervallen Flüssigkeit zu veranlassen, zurückzufließen,
wobei der Sammelabschnitt für Verunreinigungen (30) einen abnehmbaren Hilfsspeicher (31) umfasst, der an einer Außenseite eines gasseitigen Betriebsventils (15) vorgesehen ist, das in dem Kältemittelkreislauf des Außengerätes vorgesehen ist, wobei ein Kältemittel nur während des Rohrreinigungsvorgangs in dem Hilfsspeicher zirkuliert.

## Revendications

1. Climatiseur comprenant une unité extérieure (2), au moins une unité intérieure (3) raccordée à l'unité extérieure (2) par le biais d'un tuyau de réfrigérant liquide (5) et d'un tuyau de réfrigérant gazeux (4), et de tuyaux de raccordement existants disponibles pour le tuyau de réfrigérant liquide et le tuyau de réfrigérant gazeux, dans lequel une partie de collecte de matières contaminées (20), qui collecte les matières contaminées restant dans les tuyaux de raccordement existants est prévue dans un circuit de réfrigérant de l'unité extérieure (2), le climatiseur comprenant en outre :
une partie de commande de nettoyage de tuyau (25) qui nettoie les tuyaux de raccordement existants en permettant une ouverture d'une valve d'expansion électronique pour le refroidissement (11) prévue dans le circuit de réfrigérant de l'unité extérieure (2) destinée à être périodiquement ouverte et fermée plusieurs fois entre une ouverture A pendant un contrôle de degré de surchauffe et une ouverture B dans un état complètement ouvert ou dans un état sensiblement complètement ouvert, dans un cycle de refroidissement, pour ramener ainsi de manière intermittente, l'écoulement de liquide, pendant une opération de nettoyage de tuyau après le raccordement de l'unité extérieure (2) et de l'unité intérieure (3),
dans lequel la partie de collecte de matières contaminées (20) comprend un circuit de dérivation (21) comprenant un dispositif de séchage (23) qui est raccordé en parallèle à une valve d'expansion électronique pour le chauffage (9) prévue dans le circuit de réfrigérant de l'unité extérieure et permet à un réfrigérant de circuler uniquement pendant l'opération de nettoyage de tuyau.

2. Climatiseur selon la revendication 1, dans lequel lorsque la valve d'expansion électronique pour le refroidissement (11) est périodiquement ouverte et fermée, un rapport entre un temps d'établissement de l'ouverture A pendant le contrôle de degré de surchauffe et un temps d'établissement de l'ouverture B à l'état complètement ouvert ou à l'état sensiblement complètement ouvert est d'approximative ment 2/1 à 4/1.

3. Climatiseur selon la revendication 1, dans lequel le circuit de dérivation (21) est un circuit comprenant une électrovanne (22) formée au niveau d'un côté d'entrée du dispositif de séchage et une valve anti-retour (24) formée au niveau d'un côté de sortie.

4. Climatiseur comprenant une unité extérieure (2), au moins une unité intérieure (3) raccordée à l'unité extérieure (2) par le biais d'un tuyau de réfrigérant liquide (5) et d'un tuyau de réfrigérant gazeux (4), et de tuyaux de raccordement existants disponibles pour le tuyau de réfrigérant liquide et le tuyau de réfrigérant gazeux, dans lequel une partie de collecte de matières contaminées (30) qui collecte des matières contaminées restant dans les tuyaux de raccordement existants est prévue dans un circuit de réfrigérant de l'unité extérieure (2), le climatiseur comprenant en outre :
une partie de commande de nettoyage de tuyau (25) qui nettoie les tuyaux de raccordement existants en permettant une ouverture d'une valve d'expansion électronique pour le refroidissement (11) prévue dans le circuit de réfrigérant de l'unité extérieure (2) destinée à être périodiquement ouverte et fermée plusieurs fois entre une ouverture A pendant un contrôle de degré de surchauffe et une ouverture B dans un état complètement ouvert ou dans un état sensiblement ouvert, dans un cycle de refroidissement, pour ramener ainsi, de manière intermittente l'écoulement de liquide, pendant une opération de nettoyage de tuyau après le raccordement de l'unité extérieure (2) et de l'unité intérieure (3),
dans lequel la partie de collecte de matières contaminées (30) comprend un accumulateur auxiliaire détachable (31), qui est prévu au niveau d'un extérieur d'une valve de commande du côté du gaz (15) prévue dans le circuit de réfrigérant de l'unité extérieure, dans lequel un réfrigérant circule dans l'accumulateur auxiliaire uniquement pendant l'opération de nettoyage de tuyau.
